# EUROPEAN PATENT SPECIFICATION

(11) **EP 3 013 137 B1**
(45) Date of publication and mention of the grant of the patent: **18.11.2020**
(21) Application number: 13759817.3
(22) Date of filing: 24.06.2013
(51) Int. Cl.: A01G 3/053

(54) **A DOUBLE BLADE BAR FOR PRUNING AND POLLARDING, PARTICULARLY FOR OLIVE TREE GROVES, CITRUS GROVES, HEDGES, TIMBER TREES AND SIMILAR**
MESSERBLAKEN MIT GEGENLÄUFIGEN MESSERN FÜR GEHÖLZSCHNITT, INSBESONDERE FÜR OLIVEN- UND ZITRUSBÄUME, HECKEN, BÄUME UND ÄHNLICHES
BARRE DE COUPE AVEC DOUBLE COUTEAU POUR ÉBRANCHER, NOTAMMENT POUR ARBRES D'OLIVE, CITRONIERS, HAIES, ARBRES FORRESTIERS ET SIMILAIRE

(43) Date of publication of application: 04.05.2016
(73) Proprietor: OFFICINA MECCANICA B E G SRL, 06012 Città di Castello (PG) (IT)
(72) Inventor: BRAGANTI, Emilio, 06012 Città di Castello (PG) (IT); GONFIA, Pierpaolo, 06012 Cittàdi Castello (PG) (IT)
(74) Representative: Fanfani, Stefano
(86) International application number: PCT/IB2013/055165
(87) International publication number: WO 2014/207504

(56) References cited:
- DE-B- 1 239 515
- FR-A- 548 778
- US-A- 2 852 955
- US-A1- 2005 109 005
- US-A1- 2008 066 325

## Description

### Technical Field

The present invention relates to a double blade bar for pruning and pollarding, particularly for olive tree groves, citrus groves, hedges, timber trees and similar.

### Background Art

At the state of the art, bars for pruning and pollarding have a supporting framework for a cutting blade driven by a motor. The blade has teeth and moves along its development direction in an alternating manner between a lower stop and an upper stop. The framework is normally connected to a mechanical arm carried by a tractor means.

This type of bars normally have dimensions which provide lengths of between 2 and 3 meters and have a cutting capacity of up to 80 mm. diameter of the branch.

The alternative movement of the blade is given by a hydraulic motor which drives an eccentric pin.

The bar is mounted on tractor means where the operator is able to actuate the movements of the mechanical arm to allow horizontal and vertical movements and to vary the inclination of the cutting bar.

The control devices are generally constituted by levers, which operate the hydraulic distributors.

Despite the fact that this device has a good cut, however, with branches that have a larger diameter or that oppose greater resistance, binding problems may occur.

For this reason, the branch to be cut can break suddenly causing an endangerment for the plant and can induce working slowdowns.

In addition, a not accurate cutting action involves some risks even for the operator who, although adequately protected inside the passenger compartment of the tractor, may lose control of the vehicle for some moments.

To overcome these problems, it is thought to double blade bars with a second counter-chop blade in respect to the first blade.

However, this type of bars have operating problems depending on what they have to cut, branches, bushes, small diameter branches, large diameter branches, etc..

Moreover, due to the loads to which the internal mechanism is subjected, these bars have weak broken with inconvenience and costs that this entails.

Finally, not always this type of bar has an effective yield.

### Disclosure of the Invention

The aim of the invention is to eliminate the drawbacks described above in known types of blade bars, and to realize a double blade bar, for pruning and pollarding, which do not present problems of binding for any type of cut, and on the contrary, it allows clean cuts of bushes, fronds, vines, olive trees, oaks and branches of trees of any size.

Within the above aim, a purpose of the present invention is to provide a double blade bar that is reliable and effective, and which provides a long lifetime of its components avoiding breakage of the weak type.

Another purpose of the double blade bar for pruning and pollarding, particularly for olive tree groves, citrus groves, hedges, timber trees and similar, is to ensure the best performance possible in any use it is employed.

Not the last purpose of the invention is to provide a double blade bar, particularly for pruning and pollarding of olive tree groves, citrus groves, hedges, timber trees and similar, with means readily available in commerce and using materials of common use, so that the device is economically competitive.

German patent DE1239515 (B) discloses a mower with reciprocating knives and more specifically a drive for transferring reciprocal longitudinal movement to two knives longitudinally aligned to one another whereby the alternating rectilinear movement of the two knives, in opposite sense to one another, is caused by a cogwheel which is interposed between them and is directly driven by a motor. A known disadvantage of this solution is that such double knives are not capable of cutting thick branches and small trees. A similar mower is known from French patent FR548778.

Moreover, due to the loads to which the internal mechanism is subjected, these bars have weak broken with inconvenience and costs that this entails.

Finally, not always this type of bar has an effective yield.

### Disclosure of the Invention

The aim of the invention is to eliminate the drawbacks described above in known types of blade bars, and to realize a double blade bar, for pruning and pollarding, which do not present problems of binding for any type of cut, and on the contrary, it allows clean cuts of bushes, fronds, vines, olive trees, oaks and branches of trees of any size.

Within the above aim, a purpose of the present invention is to provide a double blade bar that is reliable and effective, and which provides a long lifetime of its components avoiding breakage of the weak type.

Another purpose of the double blade bar for pruning and pollarding, particularly for olive tree groves, citrus groves, hedges, timber trees and similar, is to ensure the best performance possible in any use it is employed.

Not the last purpose of the invention is to provide a double blade bar, particularly for pruning and pollarding of olive tree groves, citrus groves, hedges, timber trees and similar, with means readily available in commerce and using materials of common use, so that the device is economically competitive.

This aim, these and other objects that will become better apparent hereinafter, are achieved by a double blade bar, particularly for pruning and pollarding of olive tree groves, citrus groves, hedges, timber trees and similar, according to the invention as defined by the features of claim 1.

### Brief description of the drawings

Further characteristics and advantages of the invention will become apparent from the description of a preferred but not exclusive embodiment of the double blade bar, particularly for pruning and pollarding of olive tree groves, citrus groves, hedges, timber trees and similar, illustrated by way of indicative and not limitative example in the accompanying drawings in which:

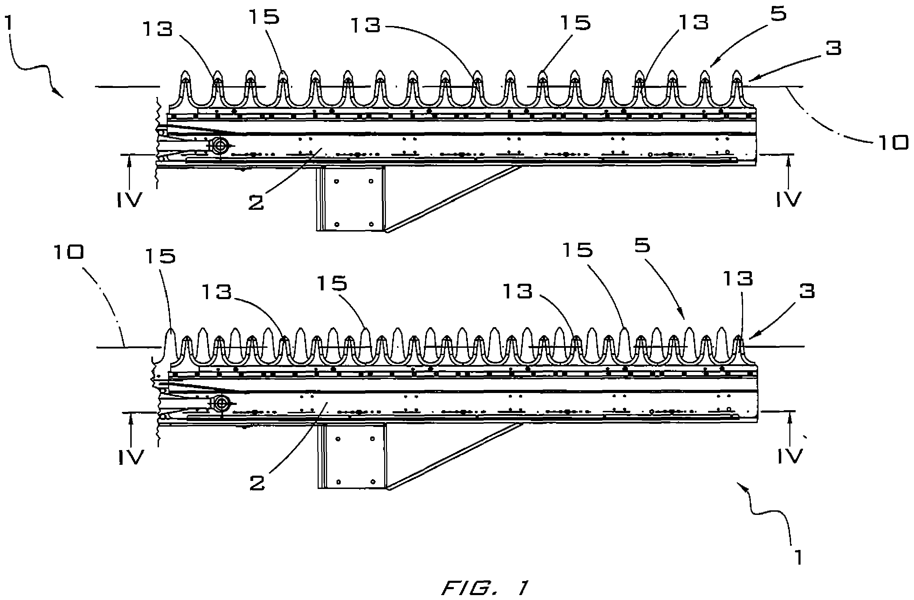

Figure 1 is a portion of the double blade bar in elevation represented respectively in an open configuration with the cutting teeth overlapping the counter-chop teeth and in a closed configuration in which each of the cutting teeth is in a substantially intermediate position with respect to the span defined by two successive counter-chop teeth;
Figure 2 is a first embodiment of the double blade bar, with an enlargement of motor means;
Figure 3 shows the section Ill-Ill of the previous figure;
Figure 4 illustrates two enlarged details of the transmission means of the double blade bar respectively in the open and in the closed configuration;
Figure 5 is a second embodiment of the double blade bar, with an enlargement of motor means;
Figure 6 shows the section VI -VI of the previous figure;
Figure 7 illustrates the rotating cam with first and second bearing, motor means of the second embodiment of Figures 5 and 6;
Figure 8 is the third variation of the double blade bar.

### Modes for carrying out the Invention

With reference to the above figures, the double blade bar, particularly for pruning and pollarding of olive tree groves, citrus groves, hedges, timber trees and similar, which is indicated in its entirety with the reference 1, according to the invention, comprises:
- a supporting framework 2 for a cutting blade 3 and a counter-chop blade 5 that develop along a cutting direction 10, which are interconnected and which are arranged to be operated in alternating rectilinear movement, in the opposite direction one another, along the cutting direction 10, passing from an open configuration of the bar in which cutting teeth 13 of the blade 3 overlap counter-chop teeth 15 of the blade 5, to a closed configuration in which each of teeth 13 is located in a substantially intermediate position with respect to the span defined by two successive teeth 15, and vice versa,
- transmission means of the alternating rectilinear movement of blades 3 and 5 having at least one upper rack 6, associated with at least a portion of the blade 3, which engages with a corresponding lower rack 8, associated with at least a portion of the blade 5, by means of a cogwheel 7, which is interposed between racks 6 and 8 and which is pivoted on a supporting rod 9 around a pivoting axis 20 and which is controlled by motor means. Racks 6 and 8 are arranged to move in a way that, in the open configuration of the bar, the cogwheel 7 engages, on one hand with a substantially median portion of the rack 6, on the other hand, with a substantially median portion of the rack 8, while, in the closed configuration of the bar, the wheel 7 must engage with a first peripheral portion of the rack 6 and, simultaneously, with a second peripheral portion of the rack 8. This second peripheral portion of the rack 8 is also anti-symmetric to the first portion, with respect to the pivoting axis 20 of the cogwheel 7.

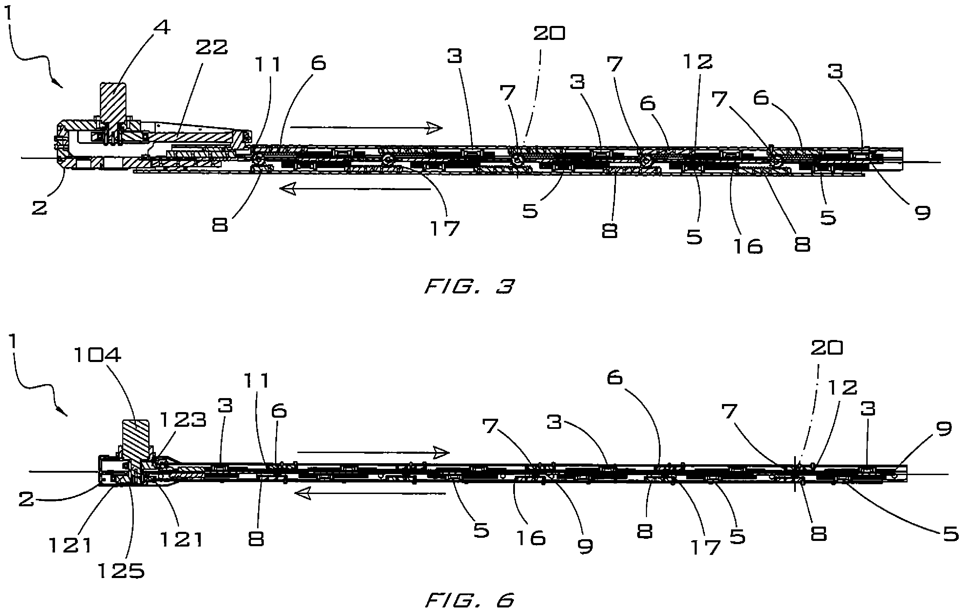

In practice, with reference to Figures 3, 4 and 6, the cutting is caused by the alternating movement of racks 6 and 8: for each displacement X of the upper rack 6 an identical feed X of the cutting blade 3 along the cutting direction 10 occurs and simultaneously, but in opposite direction, a similar advancement X' along the cutting direction 10 of the counter-chop blade 5 occurs, caused by the displacement X' of the lower racks 8. And vice versa.

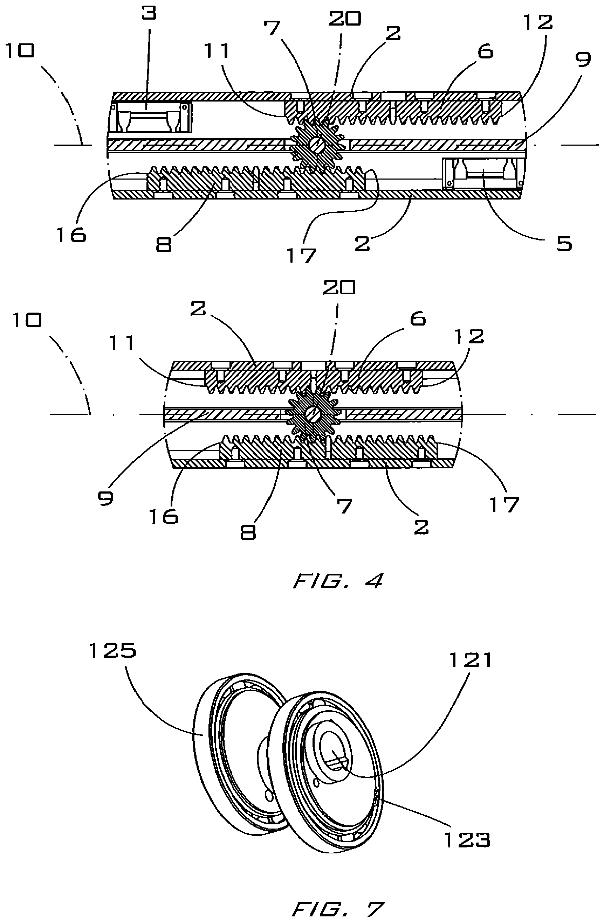

Preferably, racks 6 and 8 respectively comprise a first right stop 11 and a first left stop 12, and a second left stop 16 and a second right stop 17, so that, during the rectilinear movement of the cutting blade 3 and counter-chop blade 5, the bar passes alternately from a first position to a second position of the closed configuration [fig. 4). In the first position, the cogwheel 7 engages simultaneously with a first peripheral portion of the rack 6 close to the stop 11 and with a second peripheral portion of the rack 8 next to the stop 17, while in the second position, the cogwheel 7 engages simultaneously with a first peripheral portion of the rack 6 close to the stop 12 and a second peripheral portion of the rack 8 close to the stop 16.

In practice, the cogwheel 7 moves, engaging with racks 6 and 8 which respectively bring along the cutting blade 3 and the counter-chop blade 5, between the two pairs of stops (11-12 and 16-17), varying the span between teeth 13 and 15. In correspondence of the median portion of racks 6 and 8, when teeth 13 and 15 of the cutting blade 3 and of the counter-chop blade 5 overlap, it would be obtained the close position of the span and the cut of the branch.

Advantageously, it is provided a series of double racks, comprising a plurality of upper racks associated to the blade 3 which face on as many lower racks associated to the blade 5, identical or similar to racks 6 and 8, in which each element of the series is integrally and respectively associated to different portions of the blade 3 and 5. The number of racks 6 and 8 of each set is in function of the length of the blade and can vary from four to six pairs of racks 6 and 8 for light bars, for cutting branches and bushes, or for heavy bars arranged to cut branches with important diameter.

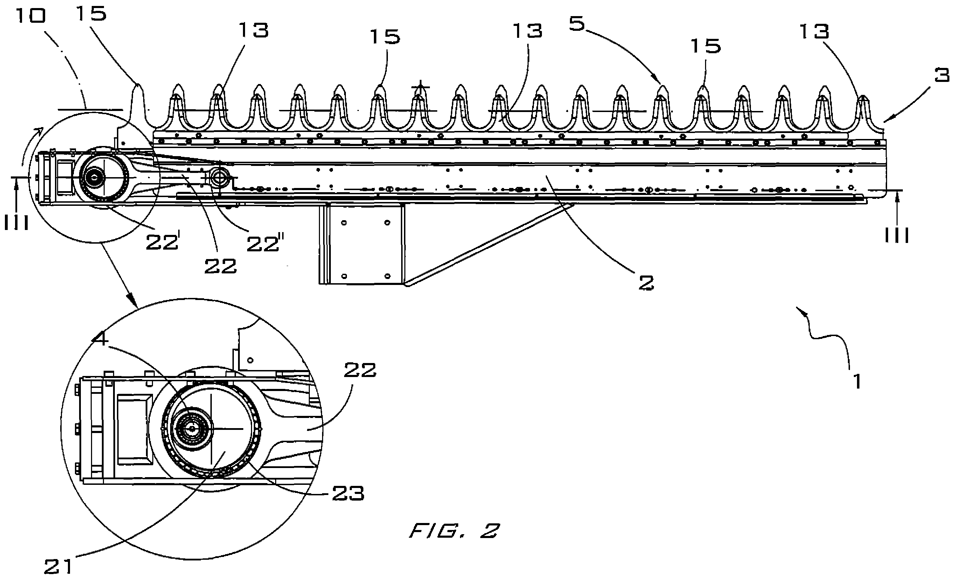

In a first embodiment, motor means comprise an eccentric flywheel 21 driven in flat circular movement by a hydraulic motor 4 and which engages with a first end 22' of a connecting rod 22, which presents the second end 22' connected to the cutting blade 3 (fig. 2).

Between the flywheel 21 and the connecting rod 22 is preferably provided a connection bearing 23.

In this way, the upper rack 6 moves alternately along the direction 10 and, thanks to the cogwheel 7 actuates the lower rack 8 that, moving in the opposite direction with respect to the rack 6, allows the alternating rectilinear movement of the blades 3 and 5 one in the opposite direction to the other.

Obviously, it is possible that the second end 22" of the connecting rod 22 is connected to the blade 5, with a similar operation compared as previously described.

This first variation allows the cutting of diameters between about 0 and 50 mm..

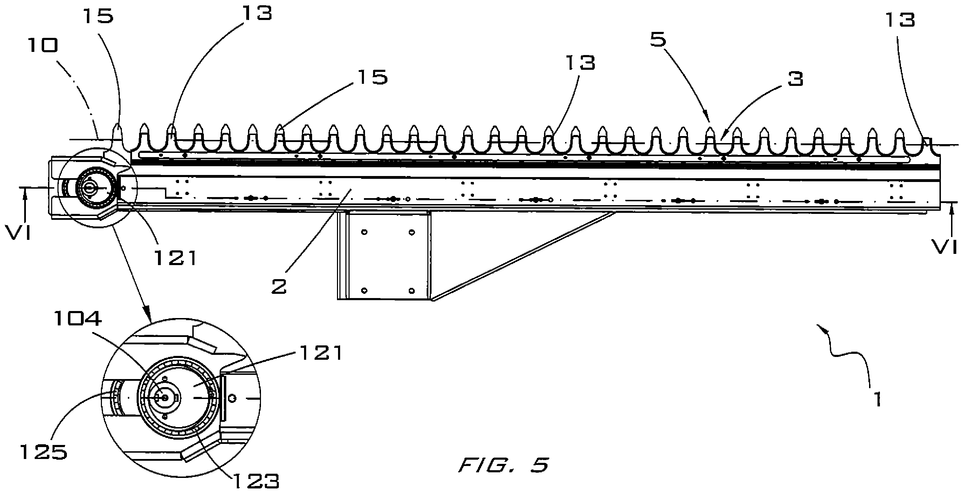

With reference to Figures 5 and 6, another embodiment provides that motor means include a cam 121 driven in rotation by a hydraulic motor 104, whose driveshaft is arranged to be coupled with said cam 121, and alternately pushing said blades 3 and 5 respectively by means of a first bearing 123 and a second bearing 125, mounted eccentrically on two distinct portions of the cam 121 (Fig. 7).

Bearings 123 and 125, operated in an eccentric rotation around the axis of symmetry of the cam 121, associated with it, in an alternating manner push respectively the blade 3 and the blade 5, allowing the alternate movement.

The drive of racks 6 and 8 similarly to what occurs in the first solution here presented, makes move blades 3 and 5 in opposite direction.

These motor means are arranged to light bar, designed for cutting small diameters, such as branches of fronds, bushes and the pruning of vines.

This alternative solution has a cutting capacity substantially included between 0 and 20 mm..

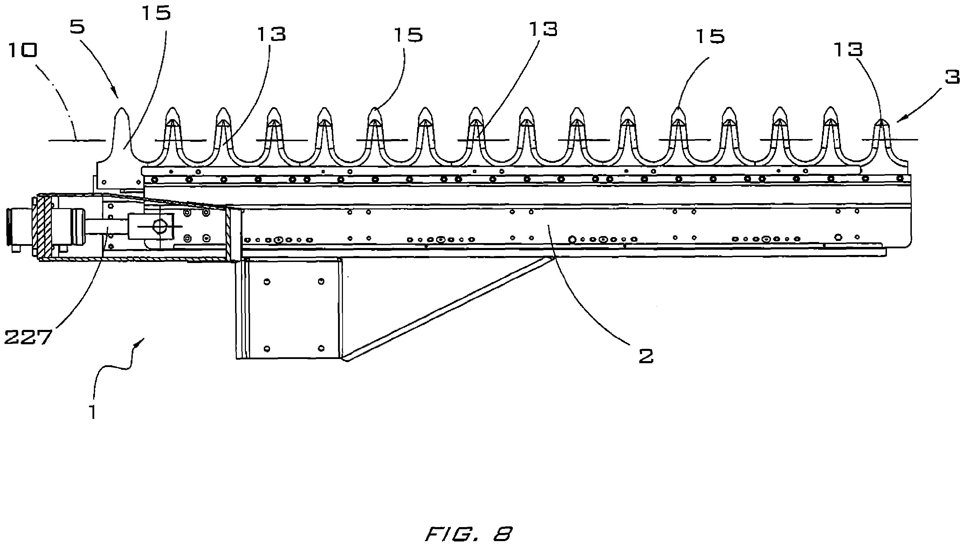

A third embodiment (fig. 8) provides that motor means comprise a cylinder 227, for example hydraulic, pushing the cutting blade 3: thanks to the rectilinear alternating movement of the blade 3, the upper rack 6 associated to it, makes move the wheel 7 which, engaging on the lower rack 8, produces the movement in the opposite direction of the counter-chop blade 5, to which it is associated.

Obviously, it is possible that the cylinder 227, instead of pushing the blade 3, acts on the counter-chop blade 5, with a similar operation as that one just described.

This third embodiment, allows the pruning and pollarding of diameters between at about 0 and 80 mm..

From the above description it is thus evident that the invention achieves the intended aim and proposed objects and in particular it is underlined the fact that it is achieved a double blade bar, particularly for pruning and pollarding of olive tree groves, citrus groves, hedges, timber trees and similar, that allows to have a clean and precise cut without binding problems.

In particular, the fact of having a counter-chop blade that, acting synergistically with the cutting blade, cuts the branch to be pruned or pollarded, ensures a clean cut without risk of binding.

Another advantage of the invention is the fact that the device allows the realization of a double blade bar reliable and effective, thus avoiding the risk of overturning the tractor and allows the operator to work safely.

Another advantage of the invention is the fact that, thanks to the movement of the blades, the device is very effective and fast in the cutting action. Furthermore, the activation of the counter-chop blade on the cutting blade (and vice versa) simulates the manual cutting, giving the plant considerable benefits and the operator a considerable safety.

Another advantage of the bar, according to the invention, is to provide a device with a large cutting capacity, allowing the user the choice of the most suitable solution to his needs in a wide range of embodiments.

Not least, the use of means readily available in the market and the use of common materials, make the device economically competitive.

The invention thus conceived is susceptible of numerous modifications and variations, all falling within the inventive concept as defined by the claims.

## Claims

1. A double blade bar for pruning and pollarding of olive tree groves, citrus groves, hedges, timber trees and similar trees, comprising:
- a support framework (2) for a cutting blade (3) and a counter-chop blade (5) extending along a cutting direction (10), interconnected and arranged to be operated in alternating rectilinear movement, in opposite sense to one another, along said cutting direction (10), from an open configuration of the bar in which the cutting teeth (13) of said cutting blade (3) overlap the counter-chop teeth (15) of said counter- chop blade (5), to a closed configuration of the bar in which each of said cutting teeth (13) is in a substantially intermediate position with respect to the span defined by two successive teeth of said counter-chop teeth (15), and vice versa,
- movement transmission means having a series of double racks, comprising a plurality of upper racks which face on as many lower racks, each element of said plurality of upper and lower racks being respectfully integrally associated with different portions of said cutting blade (3) and of said counter-chop blade (5), each upper rack (6) being arranged to be engaged with a corresponding lower rack (8) by means of a respective cogwheel (7) interposed between said upper rack (6) and said lower rack (8), arranged to be pivoted on a corresponding support rod (9) around a pivoting axis (20) and arranged to be driven by motor means, so that in said open configuration of the bar each of said cogwheels (7) engages, on one hand, with a substantially median portion of said respective upper rack (6) and, on the other side, with a substantially median portion of said corresponding lower rack (8), so that, in said closed configuration of the bar, said cogwheel (7) engages with a first peripheral portion of said respective upper rack (6) and, simultaneously, with a second peripheral portion of said corresponding lower rack (8), said second peripheral portion being anti-symmetric to said first portion with respect to said pivoting axis (20) wherein for each displacement of one of said racks (6, 8) an identical feed of said cutting blade (3) along said cutting direction (10) occurs and simultaneously, but in the opposite direction, a similar advancement along said cutting direction (10) of said counter-chop blade (5) occurs, said similar advancement being caused by the displacement of the other of said racks (6, 8), such that the alternating movement of said upper racks (6) and said lower racks (8) cause the cutting.

2. The bar according to the preceding claim, wherein said upper rack (6) and said lower rack (8) comprise respectively a first right stop (11) and a first left stop (12), and a second left stop (16) and a second right stop (17), so that the bar is arranged to alternately pass from a first position to a second position of said configuration closed during said rectilinear movement of the cutting blade (3) and of said counter-chop blade (5) along said cutting direction (10), wherein, in said first position, said cogwheel (7) engages simultaneously with a first peripheral portion of said upper rack (6) close to said first left stop (11) and with a second peripheral portion of said lower rack (8) close to said second right stop (17), whereas, in said second position, said cogwheel (7) engages simultaneously with a first peripheral portion of said upper rack (6) close to said first right stop (12) and with a second peripheral portion of said lower rack (8) close to said second left stop (16).

3. The bar according to one or more of the preceding claims, wherein said motor means comprise an eccentric flywheel (21) arranged to actuate a flat circular movement by a hydraulic motor (4) and arranged to be engaged with a connecting rod (22) connected to said cutting blade (3), and further comprise a connection bearing (23) interposed between said eccentric flywheel (21) and said connecting rod (22).

4. The bar according to one or more of the preceding claims, wherein said motor means comprise a cam (121) driven in rotation by a hydraulic motor (104) having a driveshaft coupled to said cam (121) and alternately pushing said cutting blade (3) and said counter-chop blade (5) respectively, by means of a first bearing (123) and a second bearing (125), said first bearing (123) and said second bearing (125) being mounted eccentrically on two distinct portions of said cam (121), arranged to be driven in eccentric rotation around the axis of symmetry of said cam (121) and arranged to push alternately said cutting blade (3) and said counter-chop blade (5) allowing the alternate movement.

5. The bar according to one or more of the preceding claims, wherein said motor means comprise a cylinder (227) arranged to push said cutting blade (3), so that, thanks to the rectilinear alternating movement of said cutting blade (3), said upper rack (6) makes move said cogwheel (7) which, engaging on said lower rack (8), produces the movement in the opposite direction of said counter- chop blade (5).

## Patentansprüche

1. Doppelmesserstange zum Beschneiden und Schneiteln von Olivenbaumhainen, Zitrushainen, Hecken, Nutzholzbäumen und ähnlichen Bäumen, umfassend:
- ein Tragrahmen (2) für ein Schneidmesser (3) und ein Gegenschneidmesser (5), die sich entlang einer Schneidrichtung (10) erstrecken, miteinander verbunden und angeordnet sind, um in einer abwechselnden geradlinigen Bewegung, in entgegengesetzter Richtung zueinander, entlang der Schneidrichtung (10) von einer offenen Konfiguration der Stange, in der die Schneidzähne (13) des Schneidmessers (3) die Gegenschneidzähne (15) des Gegenschneidmesser (5) überlappen, zu einer geschlossenen Konfiguration der Stange, in der jeder der Schneidzähne (13) in einer im Wesentlichen mittleren Position in Bezug auf die durch zwei aufeinanderfolgende Zähne der Gegenschneidzähne (15) definierte Spannweite ist, und umgekehrt betrieben zu werden,
- Bewegungsantriebsmittel, die eine Reihe von Doppelzahnstangen aufweisen, die eine Vielzahl von oberen Zahnstangen umfassen, die auf ebenso vielen unteren Zahnstangen zugewandt sind, wobei jedes Element der Vielzahl von oberen und unteren Zahnstangen jeweils integral mit verschiedenen Abschnitten des Schneidmessers (3) und des Gegenschneidmessers (5) assoziiert ist, wobei jede obere Zahnstange (6) angeordnet ist, um mit einer entsprechenden unteren Zahnstange (8) mittels eines entsprechenden Zahnrads (7) in Eingriff gebracht zu werden, das zwischen der oberen Zahnstange (6) und der unteren Zahnstange (8) zwischengestellt ist, das angeordnet ist, um an einer entsprechenden Tragstange (9) um eine Schwenkachse (20) schwenkbar zu sein, und angeordnet ist, um durch Motormittel angetrieben zu werden, sodass in der offenen Konfiguration der Stange jedes der Zahnräder (7) einerseits mit einem im Wesentlichen mittleren Abschnitt der jeweiligen oberen Zahnstange (6) und andererseits mit einem im Wesentlichen mittleren Abschnitt der entsprechenden unteren Zahnstange (8) in Eingriff ist, sodass in der geschlossenen Konfiguration der Stange das Zahnrad (7) mit einem ersten Umfangsabschnitt der jeweiligen oberen Zahnstange (6) und gleichzeitig mit einem zweiten Umfangsabschnitt der entsprechenden unteren Zahnstange (8) in Eingriff ist, wobei der zweite Umfangsabschnitt in Bezug auf die Schwenkachse (20) antisymmetrisch zu dem ersten Abschnitt ist, wobei für jede Verschiebung von einer der Zahnstangen (6, 8) ein identischer Vorschub des Schneidmessers (3) entlang der Schneidrichtung (10) und gleichzeitig, jedoch in der entgegengesetzten Richtung, ein ähnlicher Vorschub des Gegenschneidmessers (5) entlang der Schneidrichtung (10) erfolgt, wobei der ähnliche Vorschub durch die Verschiebung der anderen der Zahnstangen (6, 8) verursacht wird, sodass die abwechselnde Bewegung der oberen Zahnstangen (6) und der unteren Zahnstangen (8) das Schneiden verursacht.

2. Stange nach dem vorhergehenden Anspruch, wobei die obere Zahnstange (6) und die untere Zahnstange (8) einen ersten rechten Anschlag (11) bzw. einen ersten linken Anschlag (12) und einen zweiten linken Anschlag (16) bzw. einen zweiten rechten Anschlag (17) aufweisen, sodass die Stange angeordnet ist, um abwechselnd von einer ersten Position in eine zweite Position der Konfiguration, die während der geradlinigen Bewegung des Schneidmessers (3) und des Gegenschneidmessers (5) entlang der Schneidrichtung (10) geschlossen ist, überzugehen, wobei das Zahnrad (7) in der ersten Position gleichzeitig mit einem ersten Umfangsabschnitt der oberen Zahnstange (6) nahe dem ersten linken Anschlag (11) und mit einem zweiten Umfangsabschnitt der unteren Zahnstange (8) nahe dem zweiten rechten Anschlag (17) in Eingriff ist, während das Zahnrad (7) in der zweiten Position gleichzeitig mit einem ersten Umfangsabschnitt der oberen Zahnstange (6) nahe dem ersten rechten Anschlag (12) und mit einem zweiten Umfangsabschnitt der unteren Zahnstange (8) nahe dem zweiten linken Anschlag (16) in Eingriff ist.

3. Stange nach einem oder mehreren der vorherigen Ansprüche, wobei die Motormittel ein Exzenterschwungrad (21) umfassen, das angeordnet ist, um eine flache Kreisbewegung durch einen Hydraulikmotor (4) zu betätigen und angeordnet ist, um mit einer mit dem Schneidmesser (3) verbundenen Verbindungsstange (22) in Eingriff gebracht zu werden, und ferner ein Verbindungslager (23) umfassen, das zwischen dem Exzenterschwungrad (21) und der Verbindungsstange (22) zwischengestellt ist.

4. Stange nach einem oder mehreren der vorherigen Ansprüche, wobei die Motormittel einen Nocken (121) umfassen, der durch einen Hydraulikmotor (104) in Drehung versetzt wird, der eine Antriebswelle aufweist, die mit dem Nocken (121) gekoppelt ist und mittels eines ersten Lagers (123) und eines zweiten Lagers (125) abwechselnd das Schneidmesser (3) bzw. das Gegenschneidmesser (5) schiebt, wobei das erste Lager (123) und das zweite Lager (125) exzentrisch auf zwei verschiedenen Abschnitten des Nockens (121) montiert sind, die angeordnet sind, um in exzentrischer Drehung um die Symmetrieachse des Nockens (121) angetrieben zu werden, und angeordnet sind, um abwechselnd das Schneidmesser (3) bzw. das Gegenschneidmesser (5) zu schieben, wodurch die abwechselnde Bewegung ermöglicht wird.

5. Stange nach einem oder mehreren der vorherigen Ansprüche, wobei die Motormittel einen Zylinder (227) umfassen, der angeordnet ist, um das Schneidmesser (3) zu schieben, sodass dank der geradlinigen abwechselnden Bewegung des Schneidmessers (3) die obere Zahnstange (6) das Zahnrad (7) in Bewegung versetzt, das durch Eingreifen der unteren Zahnstange (8) die Bewegung des Gegenschneidmessers (5) in die entgegengesetzte Richtung erzeugt.

## Revendications

1. Barre de coupe avec double couteau pour ébrancher les arbres d'olive, les citronniers, les haies, les arbres forestiers et des arbres similaires, comprenant:
- un châssis de support (2) pour un couteau de coupe (3) et un couteau de contre-coupe (5) s'étendant le long d'une direction de coupe (10), interconnecté et agencé de telle sorte à être actionné suivant un mouvement rectiligne alternatif, dans un sens opposé l'un par rapport à l'autre, le long de dite direction de coupe (10), entre une configuration ouverte de la barre dans laquelle les dents de coupe (10) dudit couteau de coupe (3) se superposent aux dents de contre-coupe (5), et une configuration fermée de la barre dans laquelle chacune desdites dents de coupe (13) est dans une positions essentiellement intermédiaire par rapport à la distance entre deux dents successives desdites dents de contre-coupe (15), et vice versa,
- des moyens de transmission du mouvement ayant une série de doubles crémaillères comprenant une pluralité de crémaillères supérieures placées en face d'autant de crémaillères inférieures, chaque élément de dite pluralité de crémaillères supérieures et inférieures étant respectueusement intégralement associée avec différentes portions couteau de coupe (3) et dudit couteau de contre-coupe (5), chaque crémaillère supérieure (6) étant agencée de telle sorte à engager une crémaillère inférieure (8) correspondante à travers un rochet respectif (7), agencé de telle sorte à tourner sur une tige de support correspondante (9) autour d'un axe de rotation (20) et agencé pour être actionné par des moyens moteurs, de telle sorte que dans ladite configuration ouverte de la barre chacun desdits rochets (7) engage, d'un côté, essentiellement la portion médiane de ladite crémaillère supérieure respective et, de l'autre côté, essentiellement la portion médiane de ladite crémaillère inférieure correspondante (8), de telle sorte que, dans ladite configuration fermée ledit rochet (7) engage une première portion périphérique de ladite crémaillère supérieure respective (6) et, en même temps, une deuxième portion périphérique de ladite crémaillère inférieure correspondante (8), ladite deuxième portion périphérique étant antisymétrique à ladite première portion par rapport audit axe de rotation (20), où, pour chaque déplacement d'une desdites crémaillères (6, 8), une alimentation identique dudit couteau de coupe (3) a lieu le long de ladite direction de coupe (10) et en même temps un avancement similaire dudit couteau de contre-coupe (5) a lieu le long de ladite direction de coupe (10), mais dans le sens opposé, ledit avancement similaire étant causé par le déplacement de l'autre desdites crémaillères (6, 8), de telle sorte que le mouvement alternatif desdites crémaillères supérieures (6) et desdites crémaillères inférieures (8) provoque le coupe.

2. La barre selon la revendication précédente, où ladite crémaillère supérieure (6) et ladite crémaillère inférieure (8) comprennent respectivement un premier arrêt droit (11) et un premier arrêt gauche (12), et un deuxième arrêt gauche (16) et un deuxième arrêt droit (17), de telle sorte que la barre est agencée pour passer alternativement d'une première position à une deuxième position de ladite configuration fermée pendant ledit mouvement rectiligne du couteau de coupe (3) et dudit couteau de contre-coupe (5) le long de ladite direction de coupe (10), où, dans ladite première position, ledit rochet (7) engage en même temps une première portion périphérique de ladite crémaillère supérieures (6) près dudit premier arrêt, gauche (11) et une deuxième portion périphérique de ladite crémaillère inférieure (8) près dudit deuxième arrêt droit (17), tandis que, dans ladite deuxième position, ledit rochet(7) engage en même temps une première portion périphérique de ladite crémaillère supérieure (6) près dudit premier arrêt droit (12) et une deuxième portion périphérique de ladite crémaillère inférieure (8) près dudit deuxième arrêt gauche (16) .

3. La barre selon une ou plusieurs des revendications précédentes, où lesdits moyens moteurs comprennent un volant excentrique (12) agencé de telle sorte à provoquer un mouvement circulaire plat à travers un moteur hydraulique (4) et agencé de telle sorte à engager une bielle (22) reliée audit couteau de coupe (3), et comprennent également un roulement de connexion (23) interposé entre ledit volant excentrique (21) et ladite bielle 22).

4. La barre selon une ou plusieurs des revendications précédentes, où lesdits moyens moteurs comprennent une came (121) menée en rotation par un moteur hydraulique (104) ayant un arbre moteur accouplé avec ladite came (121) et poussant alternativement ledit couteau de coupe (3) et ledit couteau de contre-coupe (5) respectivement, au moyen d'un premier roulement (123) et d'un deuxième roulement (125), ledit premier roulement (125) et ledit deuxième roulement (125) étant montés excentriquement sur deux portions distinctes de ladite came (121), agencés de telle sorte à être menés en rotation excentrique autour de l'axe de symétrie de ladite came (121) et agencés de telle sorte à pousser alternativement ledit couteau de coupe (3) et ledit couteau de contre-coupe (5), permettant ainsi d'obtenir un mouvement alternatif.

5. La barre selon une ou plusieurs des revendications précédentes, où lesdits moyens moteurs comprennent un cylindre (227) agencé pour pousser ledit couteau de coupe (3), de telle sorte que, grâce au mouvement alternatif rectiligne dudit couteau de coupe (3), ladite crémaillère supérieure (6) met en mouvement ledit rochet (7) lequel, en engageant ladite crémaillère inférieure (8), produit le mouvement dudit couteau de contre-coupe (5) dans la direction opposée.
